# EUROPEAN PATENT APPLICATION

(11) **EP 2 621 140 A1**
(43) Date of publication of application: **31.07.2013**
(21) Application number: 12305078.3
(22) Date of filing: 24.01.2012
(51) Int. Cl.: H04L 29/06, H04N 21/435, H04N 21/234, H04N 21/233, G10L 15/26, G06F 17/28

(54) **Media enrichment for a call in a communication network**

(71) Applicant: Alcatel Lucent, 75007 Paris (FR)
(72) Inventor: Gupta, Varun, 122016 GURGAON (IN)
(74) Representative: Sciaux, Edmond

(57) **Abstract**

A method to provide media enrichment for a call in a communication network is described. The media enrichment described is a) providing subtitle support in video calls and b) providing audio language translation support in audio or video calls. The examples all use an IMS network (104) and Session Initiation Protocol (SIP). The method may include receiving an invite request, from a calling user where the invite request is sent to initiate a session between the calling user and a called user. The method may further include identifying user subscription details associated with the calling user for the received invite request (408), and modifying contact header field of the invite request (410), where the contact header field is indicative of the address of the calling user. The identifying user subscription details may include analyzing the session description protocol (SDP) parameters of the received request to identify a type of session between the calling user and the called user, and determining user subscription associated with the request based on the type of session to identify user subscription details associated with one of the calling user and the called user.

## Description

### FIELD OF INVENTION

The present subject matter relates to calls in a communication, network and, particularly, but not exclusively, to media enrichment for a call in the communication network.

### BACKGROUND

Communicating devices, such as laptops, computers, tablets and mobile phones, have seemingly become ubiquitous part of today's lifestyle. The communicating devices are configured to exchange multimedia content between multiple users. Users are demanding access to multimedia services anywhere and at anytime, irrespective of the communication device or the service provider being used. Service providers generally provide multimedia services to the users through various means, such as wired broadband connections, wireless internet access, data connectivity through cellular networks, and other wireless access points.

The third generation partnership project (3GPP) has defined a standardized architecture known as Internet Protocol (IP) Multimedia Subsystem (IMS) for offering multimedia services in a packet switched based domain to users whereby the service provider providing the IMS services, controls the services offered by the IMS. With recent advances in technology and growing competition, a large number of multimedia services, are offered by service providers, which are accessible using various computing devices. Multimedia services like push to talk, instant messaging, video calling, and conference calling, are utilized by users for audio and video downloading/streaming, voice communications, video communications, and conference communications.

The video calling services offered by the service providers through the IMS network allow enriched user communication experience during exchange of data through various communication devices, which may support different access networks, such as cellular network, and IP network. With connectivity through various access networks, IMS provides on the go multimedia services to users along with the flexibility to utilize the services through various platforms. Further, since the multimedia services are based on a user subscription, which may be independent of the communication device being used by a user taken by, the IMS allows users to utilize the multimedia services without any dependency on a particular communication device.

### SUMMARY

This summary is provided to introduce concepts related to media enrichment for a call in an IMS network. This summary is not intended to identify essential features of the claimed subject matter nor is it intended for use in determining or limiting the scope of the claimed subject matter.

In one implementation, a method to provide media enrichment for a call in a communication network is described. The method may include receiving an invite request from a calling user, where the invite request is sent to initiate a session between the calling user and a called user. The method may further include identifying user subscription details associated with the calling user for the received invite request, and modifying contact header field of the invite request based on an address of a media server, wherein the media server is configured to provide media enrichment for the call.

In one implementation, the identifying user subscription details may include analyzing the session description protocol (SDP) parameters of the received request to identify a type of session between the calling user and the called user, and determining user subscription associated with the request based on the type of session to identify user subscription details associated with one of the calling user and the called user. In said implementation, the user subscription may relate to one or more of subtitle support in video calls, audio language translation support in video calls, and audio language translation support in audio calls.

In one implementation, the user subscription details are one or more of type of subscription, the language of subtitle, language of audio translation, and a list of users for which subscription has been made for. In said implementation, the type of subscription based on type of session may include one or more of subtitle support for all incoming video calls, subtitle support for selected incoming video calls, subtitle support for all outgoing video calls, subtitle support for selected outgoing video calls, audio language translation for all incoming video calls, audio language translation for selected incoming video calls, audio language translation for all outgoing video calls, audio language translation for selected outgoing video calls, audio language translation in all incoming audio language calls, audio language translation in selected incoming audio calls, audio language translation in all outgoing audio calls, and audio language translation in selected outgoing audio calls.

In another implementation, a method to provide media enrichment for a call in a communication network may include receiving a Session Progress request, from a called user, where the session progress request is sent to confirm a session between the called user and a calling user. The method may further include identifying user subscription details associated with the called user for the received session progress request, and modifying the contact header field of the session progress request based on an address of a media server, wherein the media server is configured to provide media enrichment for the call.

In yet another implementation, a method to provide media enrichment for a call in a communication network may include receiving a media register (MR) request, from an S-CSCF associated with a user, where the MR is based on a call session established between the user and another user. The method may further include receiving media content from the another user, and modifying the media content to provide at least one of subtitle support and audio language translation support based on the MR request.

In one implementation, an S-CSCF to provide media enrichment for a call in a communication network is described. The S-CSCF may include a processor and a memory coupled to the processor. The memory may include a request receiving module configured to receive a Session Initiation Protocol (SIP) request from a user to establish a call session between the user and a another user. The memory may further include an authentication module configured to identify user subscription details associated with the user for the received SIP request. The memory may also include a header modification module configured to modify contact header field of the SIP request based on the identified user subscription details to generate a modified SIP request.

In another implementation, a media server to provide media enrichment for a call in a communication network is described. The media server may include a processor, and a memory coupled to the processor. The memory may include a request processing module configured to receive a media register (MR) request from an S-CSCF associated with a user where a call session is established between the user and another user; and receive a media content from the another user based on the MR request. The memory may also include a subtitle generation module configured to provide subtitle support to the media content to generate modified media content.

In yet another implementation, a computer-readable medium having embodied thereon a computer readable program code for executing a method is described. The method may include receiving a session initiation request from a user to establish a call session between the user and another user; and identifying user subscription details associated with the user for the received session initiation request. The method may further include modifying contact header field of the session initiation request based on the identified user subscription details to generate a modified session initiation request.

In one implementation, a computer-readable medium having embodied thereon a computer readable program code for executing a method is described. The method may include receiving a media register (MR) request, from an S-CSCF associated with a user, where the MR is based on a call session established between the user and another user. The method may also include receiving media content from the another user, and modifying the media content to provide at least one of subtitle support and translation support based on the MR request.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Fig. 1 illustrates an exemplary communication network environment, according to an embodiment of the present subject matter;

Fig. 2(a) schematically illustrates network entities providing for media enrichment for a call in an IMS network, in accordance with an embodiment of the present subject matter;

Fig. 2(b) is a call flow diagram describing media enrichment for a call in an IMS network, according to an embodiment of the present subject matter;

Fig. 2(c) is a call flow diagram further indicating a media enrichment for a call in an IMS network, according to an embodiment of the present subject matter;

Fig. 2(d) is another call flow diagram further indicating media enrichment for a call in an IMS network, according to an embodiment of the present subject matter;

Fig. 2(e) is a call flow diagram also indicating media enrichment for a call in an IMS network, according to an embodiment of the present subject matter;

Fig. 3 schematically illustrates components a media server, in accordance with an embodiment of the present subject matter;

Fig. 4(a) illustrates a method to provide media enrichment for a call in an IMS network, in accordance with an embodiment of the present subject matter; and

Fig. 4(b) illustrates a method to provide media enrichment for a call in an IMS network, in accordance with an embodiment of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

Systems and methods for providing media enrichment such as subtitles to a video call and audio language translation in a communication network for a call, are described. The methods can be implemented in various communication devices communicating through various networks. Although the description herein is with reference to an IMS network, the methods and systems may be implemented in other networks providing video calling services, albeit with a few variations, as will be understood by a person skilled in the art.

Although IMS is a generic architecture for offering multimedia and voice over IP (VoIP) services. Furthermore, IMS based architectures are also access independent, and support multiple access types including Global System for Mobile (GSM), Wideband Code Division Multiple Access (W-CDMA), Code Division Multiple Access (CDMA), Wireless Local Area Network (WLAN), Wireline and other packet data applications. The systems and methods described herein can be implemented in systems capable of supporting video calls in accordance with the Global System for Mobile (GSM) techniques utilizing the different GSM communication standards, such as 2G, and 3G. Further, the methods may also be implemented in systems capable of supporting video calls in accordance with the Code Division Multiple Access (CDMA) technique utilizing the different CDMA communication standards, such as IS 95 or cdmaOne, and CDMA 2000.

The methods described herein may be used for various wireless communication systems such as Code Division Multiple Access (CDMA), Time Division Multiple Access (TDMA), Frequency Division Multiple Access (FDMA), Orthogonal Frequency-Division Multiple Access (OFDMA), Single Carrier Frequency Division Multiple Access (SC-FDMA) and other systems. A CDMA system may implement a radio technology such as Universal Terrestrial Radio Access (UTRA), cdma2000, etc. UTRA includes variants of CDMA Cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.20, IEEE 802.16 (WiMAX), 802.11 (WIFITm), Flash-OFDM^{®}, etc. UTRA and E-UTRA are part of Universal Mobile Telecommunication System (UMTS)..

Nowadays, telecommunication users are becoming increasingly demanding in terms of the number of features offered by the service providers. The users welcome services that appeal to their emotional as well as their practical needs. New, exciting services and enhancements to existing services have a key role to play in making the communications experience much more realistic, like interacting face-to-face. To provide such experiences, service providers are now increasingly utilizing the IMS network.

IMS is a generic architecture which offers multimedia and voice over IP services defined by 3GPP, which caters to the evolving user needs and provide rich user experiences. IMS is access independent as it supports multiple access types including GSM, WCDMA, CDMA2000, WLAN, Wireline broadband and other packet data applications. IMS further makes Internet technologies, such as web browsing, e-mail, instant messaging and video conferencing available to everyone from any location.

Effectively, IMS provides a unified architecture that supports a wide range of IP-based services over both packet and circuit-switched networks, employing a range of different wireless and fixed access technologies. A user could, for example, pay for and download a video clip to a chosen mobile device or fixed device and subsequently use some of this material to create a multimedia message to share with other devices on many different networks. A single IMS presence-and-availability engine could track a user's presence and availability across mobile, fixed, and broadband networks. Therefore, such connectivity and services gives rise to better communication experiences that provide aid to the ever increasing social networking.

Among multiple services provided by the IMS network, a user may utilize video calling service to communicate with other users connected to different networks or located at different geographic locations at any given instance. This allows communication across users with various ethnic backgrounds and associated with different linguals. In such scenarios, the audio and video calls may be connected between users communicating in different languages. However, while communicating with users of different languages, with different dialects, or those with an impaired hearing or impaired vision, the communication may become cumbersome and the user experience may diminish.

According to an implementation of the present subject matter, systems and methods for providing media enrichment for a call in an IMS network are described. In one implementation, video calls initiated and received by a user are supported with subtitles based on the audio content of the video call. A subtitle supported video may include captions displayed on the screen of the user that transcribe the audio of the dialogue in the video call. As described before, the systems and methods can be implemented in a variety of processing and communicating devices capable of communicating with a network according to the different standards defined for the communication.

The systems and methods as described herein, on one hand, provide subtitle support for video calls, and on the other, also provide a user with choice of audio conversion from one language or dialect to another in a video call. Further, the described methods may also be implemented in audio communications through IMS network where the described techniques are utilized for conversion of audio communication from one language or dialect to another. In one implementation of the present subject matter, the systems and methods to provide media enrichment for a call may also include quality enhancements, such as noise reductions, and voice clarity.

In general, to avail multimedia service through the IMS network, a user may connect to the IMS network through any access network, such as wireline connection (e.g., DSL, cable) or wireless network protocol (e.g., Wi-Fi, GSM or CDMA). The connection of each user in the IMS network is supported by a session control layer, which includes network control servers for managing calls, establishing audio/video sessions, and modification of sessions and user details. A session in the IMS network can be understood as a communication session between set of senders and receivers, and the data streams flowing from the senders to the receivers. For example, a session may be a video call between two parties or a conference call among more than two parties.

The session control layer of the IMS includes a Home Subscriber Server (HSS). The HSS implements a database to maintain each end user's service profile. The service profile associated with each of the end user may include information related to user location, service triggers, user identities, registration information, subscribed services, etc. The session control layer of the IMS also includes a Call Session Control Function (CSCF) to perform end-point registration and routing of the signaling messages to an application server related to a particular service. The CSCF may be a Proxy-CSCF (P-CSCF), an Interrogating CSCF (I-CSCF), and a Service CSCF (S-CSCF). The IMS may also include an application layer to compliment the session control layer and provide services through application and content servers.

The P-CSCF acts as a proxy server to Session Initiation Protocol (SIP) requests sent by different users connected to the IMS network. The I-CSCF may act as a gateway to the IMS network and may also contact the HSS of the IMS to retrieve details of a user. The I-CSCF is an optional function which may be used by the service providers implementing the IMS network as a gateway between the IMS network's internal structure and the other external network. The S-CSCF may provide session control service to each registered user connected to the IMS network. The S-CSCF, amongst other functions, may also maintain session states for each registered user's on-going session and relay SIP requests and responses between communicating users. It would be understood by those skilled in the art that the IMS network may implement multiple P-CSCF, and S-CSCF for the purpose of call session control functions, where each user may be connected to a P-CSCF and a user may be served by a single S-CSCF.

According to an implementation of the present subject matter, the IMS network may implement a media server for providing media enrichment for a call, such as subtitle support and language translation services to the users. The media server may enhance a video call with subtitles based on the audio associated with the video. Also, the media server may translate audio from one language to another. In an example, to assist a user with subtitles and audio conversion, flow of the data received by the user may be redirected first to the media server and then to the user, within the IMS network. The subtitle support and the audio language translation services may be provided to a calling user as well as a called user, for which, the media server may be implemented with the S-CSCF associated with both the users.

The media server may provide subtitle support to the video calls and the audio language translation service to the registered users of the IMS network. The service of subtitle support and audio language translation may be utilized by the users from various locations and at different time instances. As would be appreciated, to utilize the services provided by the IMS network, a user may connect to the IMS network through any of the many available IP networks using any of the communication devices supporting IP connectivity. This allows the users to utilize the services on the go without depending on any particular network or any particular communication device. Further, this also allows the users not to be dependent on particular communication device running particular softwares and applications to benefit from the services of subtitle support to the video calls and the audio language translation, thereby providing true-mobility and portability.

Although the description hereinafter is with reference to subtitle support in video calls in the IMS network, the methods and systems may be implemented in similar manner for audio language translation in video and audio calls, albeit with a few variations, as will be understood by a person skilled in the art.

In operation, a user may initiate a video call, to communicate with another user, through the IMS network. For the purpose of explanation, the user who has initiated the video call may be hereinafter referred to as the calling user and the user at the receiving end may be referred to as the called user. The calling user may subscribe to the service of subtitle support in video calls. Such a subscription may include multiple selections, such as subtitle support in all incoming video calls, subtitle support in selected incoming video calls, subtitle support in all outgoing video calls, and subtitle support in selected outgoing video calls.

In one implementation, the calling user may send an invite request for the called user, to initiate a video call. The invite request may be understood as a request sent by the calling user to initiate a session with a called user. The invite request may include details regarding the destination of the called user and an address where the calling user wishes to receive further SIP requests from the called user. Such details are available in the contact header field of the invite request. In other words, the invite request includes the address and location details of the called user along with the address and location details of the calling user. In situation where the calling user desires to receive the SIP requests from the called user on another location, the invite request may include the address of that location instead of the calling users address. It would be understood that the calling user may have to subscribe only once to the service of subtitle support in the language preferred by him for all video calls, and may not have to subscribe for this service before initiation of every video call.

The invite request sent by the calling user is received by a P-CSCF of the IMS network. It would be understood that the IMS network may include multiple P-CSCFs where each P-CSCF is the user's first contact point of the IMS network. Further, each P-CSCF may register a new user with the IMS network and receive the details associated with the new user, such as user identity, registration information, service-route, and servicing S-CSCF. As described before, the P-CSCF acts as a SIP Proxy Server to accept requests, such as the invite request from the calling user. It would be understood that registration is different from subscription with the IMS network, where subscription may be understood as a case where a user may have to subscribe once for certain services with the IMS network for a limited period of time, however the registration process may occur after every pre-defined time period to identify the location related details of the user. Further, the registration may also occur when the user is travelling and gets connected with a new P-CSCF to avail the services of the IMS network.

To forward the invite request of the calling user, the P-CSCF may identify the S-CSCF, and a service-route associated with the calling user based on the service-route header field sent to the calling user upon registration with the IMS network, in the form of a 200 (OK) request. In one implementation, if the P-CSCF is unable to identify the service-route for the invite request received from the calling user based on the service-route header field received during the registration process, the P-CSCF may either replace the router header based on pre-configured entry, or may send a 400 (Bad Request) request to the calling user without forwarding the invite request any further.

Based on the identification of service-route header by the P-CSCF, the invite request is received by the S-CSCF associated with the calling user of the IMS network. The S-CSCF associated with the user includes service profile related to the calling user. Among other information, the calling user's service profile contains the filter criteria for different requests. The filter criteria define the collection of triggers that decide whether the request has to traverse one or more application servers to provide services to the calling user. It would be understood that the S-CSCF receives the profile of the calling user from the HSS during the registration procedure. Further, it would be also understood that the S-CSCF does not execute services, but triggers services to be executed by the application servers.

In one implementation, the invite request is analyzed by the S-CSCF to identify if the calling user is requesting for a video call. In case the invite is for a video call, the subscription of the calling user for the subtitle support is verified by the S-CSCF. The subscription of the calling user may be verified based on the service profile of the calling user received from the HSS during the registration process. In case the calling user has subscribed to the service of subtitle support in video calls, the user subscription details may be identified by the S-CSCF along with the related permissions from the data received with the HSS.

As described before, the user may have chosen for an outgoing call, either 'subtitle support in all outgoing video calls' or 'subtitle support in selected outgoing video calls'. Subscriber permissions may further be verified by the S-CSCF based on the HSS data for the called user to determine whether the calling user can make a subtitle supported call with the called user or not. Such subscription details and permissions may be provided to the S-CSCF by the HSS during the registration procedure. The subscription details may include, but are not limited to, the language of subtitle, language of audio translation, the type of subscription, and the list of called users for which subscription has been made for by the calling user.

In one implementation, upon identifying the subscription details and the associated permissions, the S-CSCF may modify the contact header field of the invite request which describes the address of the calling user. The S-CSCF may set the contact header field, from the address of the calling user to an address of the media server. The media server may be implemented for the calling user to provide subtitle support and audio language translation support to the video data and/or audio data sent by the called user. As described, the media server may support the video sent by the called user to the calling user with subtitles based on the audio associated with the video. The modification in the contact header of the invite request ensures that the video data received by the calling user, from the called user, is intercepted at the media server and provided with subtitle support. The media server may then forward the video data along with subtitles to the calling user.

In said implementation, upon modifying the contact header field of the invite request, the S-CSCF may also send a media-register (MR) request to the media server to intimate the initiation of a session between the calling user and the called user. The MR request may provide the media server associated with the calling user, details of the session to be established between the calling user and the called user. Further, based on the MR request, the media server may also identify the details of the location of the calling user and the called user for providing and receiving video data in future. For this purpose, the S-CSCF may provide the session details and the original contact header details of the contact header field along with other details to the media server, for subtitle support and streaming of the video data sent by the called user; back to the calling user. It would be understood that the MR request may be sent by the S-CSCF to the media server more than once, any time before the actual media content streaming between the called user and the calling user to indicate relevant session parameters to provide dynamic captioning support. Further, based on the MR request, the media server may identify the negotiated audio/video codec associated with the session between the calling user and the called user.

Upon changing the contact header field, the invite request may then be forwarded to the called user through an I-CSCF of the IMS network. The called user may receive the invite request through the S-CSCF associated with it. In one implementation, the I-CSCF may have to query a HSS associated with the called user to obtain the address of the S-CSCF associated with the called user. It would be understood that the S-CSCF associated with the called user would forward the invite request to the called user through a P-CSCF to which the called user is presently connected to.

In one implementation, the called user may respond to the invite request with a 183 (session progress) request. The called user also inserts a contact header field in the response 183 request. The value of the contact header field may include the physical address details, associated with the called user, to which the called user wishes to receive the media content from the calling user in subsequent data flows. The session progress request may be delivered to the calling user by the P-CSCF to which the calling user is connected to, where the session request traverses back to the calling user through the same path through which the invite request was sent. In one implementation, the called user may send a request similar to the session progress request where the communication between the calling user and the called user is not in SIP format.

Upon establishment of a connection, the video data provided by the calling user is provided directly to the called user on the location specified by the called user in the session progress request; however the video data sent by the called user, for the calling user, is first received by the media server associated with the calling user. The media server may process the video data to insert subtitles and may in turn stream it to the calling user.

In one another embodiment of the present subject matter, the called user may have also subscribed to the service of subtitle support in video calls where subtitles are provided to the video calls received by the called user. In such a scenario, the S-CSCF associated with the called user may verify the subscription of the called user to identify whether the called user has subscribed for the service of subtitle support in video calls, upon receiving the session progress request. The S-CSCF associated with the called user may also verify the called user subscription based on the service profile of the called user received from the HSS associated with the called user. The S-CSCF associated with the called user may identify the subscription details and permissions for the called user from the data provided by the HSS, in a similar manner as done by the S-CSCF associated with the calling user. Therefore, the details of the same have been omitted for the sake of brevity.

A media server may also be implemented for the called user to process and support the video sent by the calling user with subtitles. It would be understood that the S-CSCF associated with the called user may modify the contact header field of the 'session progress'. In one implementation, the contact header field may be modified with the address details of the media server implemented for the called user. The S-CSCF associated with the called user may, in a similar manner to the S-CSCF associated with the calling user, send a MR request to the media server. It would be also understood that the media server implemented for the calling user may be different from the media server implemented for the called user.

In above said embodiment, both users, the calling user and the called user, would be provided with subtitle support along with the video provided by the called user and the calling user respectively. Further, since the called user and the calling user both have subscribed to the service of subtitle support, it would be understood by those skilled in the art that each user of the IMS network may avail the choice of service based on selection for receiving calls and terminating calls.

In another implementation of the present subject matter, the subtitle support capability may be implemented itself by the S-CSCF associated with the users. In said implementation, a MR request to an external entity, such as the media server, may not be required for the purpose of providing subtitle support to the video data. It would be appreciated that in such a scenario, the S-CSCF, to provide subtitle support, may change the contact header field of the invite/session progress request with the location details of the S-CSCF instead of the details of an external media server. It would be understood that in such a scenario, the S-CSCF associated with the calling user may modify the contact header field of the invite request, and the S-CSCF associated with the called user may modify the contact header field associated with the session progress request.

Upon completion of the exchange of signaling session between the calling user and the called user, the calling user and the called user may communicate with each other directly. This may involve a one-to-one communication without including the in-between call session control function entities, such as the S-CSCF and the I-CSCF. Further, the video data provided by the called user may be intercepted by the media server of the calling user, and the video data provided by the calling user may provided directly to the called user if the called user has not subscribed for the subtitle support service. In case the called user has also subscribed for the service of subtitle support, the video data sent by the calling user may as well be intercepted by the media server implemented for the called user. In other words, the media server is involved in intercepting the video data and providing subtitle support in situations where either one of, or both of the calling user and the called user have subscribed for the service of subtitle support. Further, the media server may also provide audio language translation from one language to another along with subtitle support in video calls. The audio language translations may be provided to video call sessions as well as to the audio call sessions in the IMS network.

Since the connection to the IMS network is independent of any particular communication device, users may utilize the service of subtitle support through any communication device from any geographic location without depending on a particular software or application to provide such support. Further, the service of subtitle support may provide an enriched video call experience to the users belonging to different ethnic backgrounds and familiar with different languages.

Although the description herein is with reference to IMS network, the systems and methods may be implemented in other networks and devices that may or may not be supported by the IMS network, albeit with a few variations, as will be understood by a person skilled in the art. The other communication networks may include Global System for Mobile Communication (GSM) network, Universal Mobile Telecommunications System (UMTS) network, Long Term Evolution (LTE) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN).

It should be noted that the description merely illustrates the principles of the present subject matter. It will thus be appreciated that those skilled in the art will be able to devise various arrangements that, although not explicitly described herein, embody the principles of the present subject matter and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

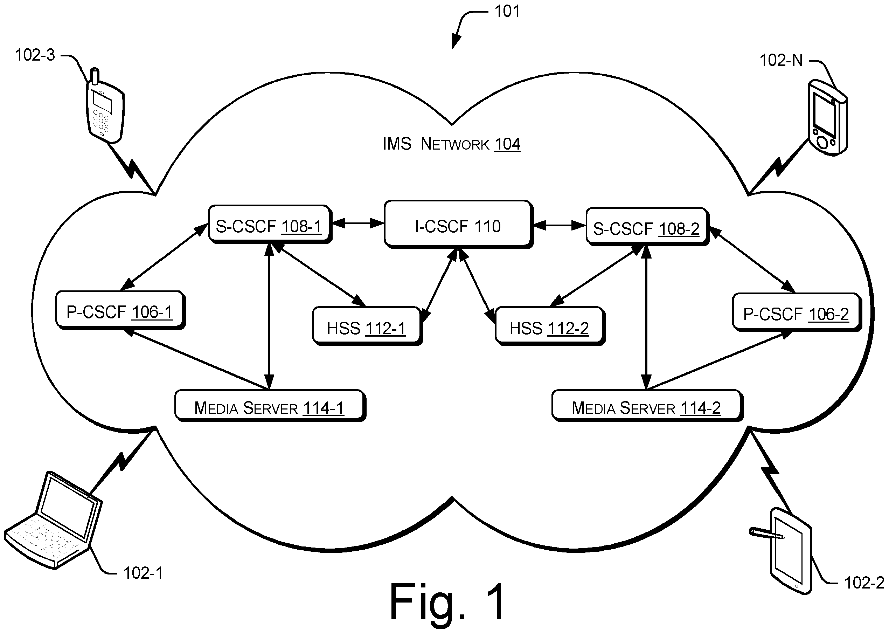

The manner in which the systems and methods of providing media enrichment for a call in an IMS network shall be implemented has been explained in details with respect to the Figures 1-4. While aspects of described systems and methods for providing media enrichment for a call in an IMS network can be implemented in any number of different computing systems, transmission environments, and/or configurations, the embodiments are described in the context of the following exemplary system(s).

It will also be appreciated by those skilled in the art that the words during, while, and when as used herein are not exact terms that mean an action takes place instantly upon an initiating action but that there may be some small but reasonable delay, such as a propagation delay, between the initial action and the reaction that is initiated by the initial action. Additionally, the word "connected" and "coupled" is used throughout for clarity of the description and can include either a direct connection or an indirect connection.

Fig. 1 illustrates a communication network environment 101 providing assistance in video calls, according to an embodiment of the present subject matter. The communication network environment 101 includes one or more User Equipments (UE) 102-1, 102-2, 102-3, and 102-N (collectively referred to as UE(s) 102) communicating with each other through an IMS 104. The UEs 102 are used by different users to communicate with each other and establish session between different users. Further, the user utilizing the UE 102 may have subscribed to the services provided by the IMS network 104 to utilize one or more services through the IMS network 104. The UEs 102 may include any communication device including, but not limited to, desktop computers, hand-held devices, laptops or other portable computers, network computers, mobile phones, and fixed phones. Each of the UEs 102 works on a communication protocol as defined by the IMS network 104 to which the UE 102 is coupled.

The IMS network 104 may be a wireless or a wired network, or a combination thereof. The IMS network 104 can be a collection of individual networks, interconnected with each other and functioning as a single large network (e.g., the internet or an intranet). Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, and Next Generation Network (NGN). Depending on the technology, the IMS network 104 includes various network entities, such as gateways, routers; however, such details have been omitted for ease of understanding.

The description is explained with reference to the users utilizing UEs 102-1 and 102-2 however, the same can be extended to other users utilizing different UEs as well. For the sake of explanation, the UE 102-1 may be considered to be connected to a P-CSCF 106-1. Further, due to various reasons, such as being located in a different geographic location, the UE 102-2 may be connected to another P-CSCF, such as P-CSCF 106-2. The P-CSCF 106-1 and the P-CSCF 106-2 have been referred to as P-CSCF(s) 106, hereinafter. The IMS network 104 may include multiple P-CSCFs to service requests of users, however for the ease of explanation; two P-CSCFs, 106-1 and 106-2 connected to the UEs 102-1 and 102-2 respectively have been described.

The users utilizing the UEs 102-1 and 102-2 may be associated with an S-CSCF of the IMS network 104. In one implementation, the user utilizing the UE 102-1 is associated with S-CSCF 108-1, and the user utilizing the UE 102-2 is associated with S-CSCF 108-2, which may communicate with each other through the I-CSCF 110. As described earlier, the I-CSCF 110 may act as a gateway between the IMS network 104s internal entities. The S-CSCF 108-1 and the S-CSCF 108-2, hereinafter referred to as S-CSCF(s) 108. The S-CSCF 108 may provide session control service to each registered user of the IMS network 104. Further, the S-CSCF 108, amongst other functions, may also maintain session states for each registered user's on-going session and relay SIP requests and responses between communicating users.

The service profile associated with each user is stored in a HSS associated with the user. In one implementation, HSS 112-1 stores the user service profile associated with the user utilizing the UE 102-1 and HSS 112-2 stores the user service profile associated with the user utilizing the UE 102-2. For the ease of explanation, the HSS 112-1 and the HSS 112-2 are referred to as HSS 112, hereinafter. The HSS 112 implements a database to maintain each end user's service profile. The service profile associated with each of the end user may include information related to user location, service triggers, user identities, registration information, subscribed services, etc.

The IMS network 104 may also implement one or more media servers to provide media enrichment for a call, such as subtitle support to video calls and audio language translation from one language to another for video and audio calls. In one implementation of the present subject matter, the IMS network 104 implements a media server 114-1 for the user associated with the S-CSCF 108-1 and a media server 114-2 for the user associated with the S-CSCF 108-2. For the sake of simplicity, the media server 114-1, and the media server 114-2 would be referred to as the media server(s) 114, hereinafter.

Although, the description hereinafter has been explained with reference to assistance in video calls to provide subtitle support, it would be understood that assistance to audio calls for translation from one language to the other may be implemented in similar manner, albeit with a few variations, as will be understood by a person skilled in the art.

According to an implementation of the present subject matter, the user utilizing the UE 102-1 may initiate a video call session with the user utilizing the UE 102-2 through the IMS network 104. For this purpose, the UE 102-1 may send an invite request to the P-CSCF 106-1 to which the UE 102-1 is presently connected to. The user utilizing the UE 102-1 may have subscribed to a service of subtitle support in outgoing video calls. The subscription may include multiple choices that may include, but not limited to, subtitle support in all outgoing calls, subtitle support in selected outgoing calls, subtitle support in all incoming calls, and subtitle support in selected incoming calls. Further, the subscription may also include audio language translation support in audio calls which may further include multiple choices that may include, but not limited to, audio language translation in all outgoing calls, audio language translation in selected outgoing calls, audio language translation in all incoming calls, and audio language translation in selected incoming calls.

The subscription to subtitle support in all outgoing calls may enable a service for the user where all the video calls initiated by the user utilizing the UE 102-1 are supported by subtitles. In such a case, the video data received by the calling user utilizing the UE 102-1 from any called user would be coupled with subtitles/captions in the desired language, opted in the subscription. Further, the subscription to subtitle support in selected outgoing calls may enable a service for the user where calls initiated by the UE 102-1 towards selected called users are supported by subtitles. While selecting the option of subtitle in selected outgoing calls, the user utilizing the UE 102-1 may also define the list of selected called users for which the subtitle support is subscribed for. Similarly, the subtitle support in all incoming calls and subtitle support in selected incoming calls allows the user to obtain subtitle support for incoming calls. The former selection may allow the user to obtain subtitle support for all incoming calls while the latter allows the user to obtain subtitle support for calls received from selected users. The user may further define a list of users for which the user may wish to enable the service of subtitle support.

It would be appreciated that the user may, at any instance, add certain users or remove certain users from the list of selected users. Further, in one implementation, the list of users for subtitle support in selected outgoing calls may include same set of users as in the list defined for subtitle support in selected incoming calls, however, in another implementation, the list of users for subtitle support in selected outgoing calls may include different set of users as in the list defined for subtitle support in selected incoming calls.

In one implementation of the present subject matter, the invite request received by the P-CSCF 106-1, is analyzed. The P-CSCF 106-1 determines an S-CSCF to which the invite request is to be forwarded for processing. In said implementation, the P-CSCF 106-1 determines the S-CSCF associated with the UE 102-1 based on the service-route corresponding to the UE 102-1. As described before, the service-route associated with the UE 102-1 is derived from the service-route header provided by the P-CSCF 106-1 in the registration confirmation request, in the form of 200 (OK) response. The P-CSCF 106-1, along with the service-route related to the UE 102-1, also includes details regarding the user identity, registration information, and servicing S-CSCF, as would be understood by those skilled in the art. In said implementation, the P-CSCF 106-1 may determine the S-CSCF 108-1 to be associated with the UE 102-1 based on the service-route of the UE 102-1. Further in another implementation, if the P-CSCF 106-1, due to various reasons, is unable to identify the service-route related to the UE 102-1 to forward the invite request, may either replace the service-route header based on pre-configured entry, or may send a 400 (Bad Request) to the UE 102-1 without forwarding the invite request to any network entity further.

The S-CSCF 108-1 associated with the UE 102-1 may receive the invite request sent by the UE 102-1 for a video session, from the P-CSCF 106-1. In one implementation, the invite request may include a request Uniform Resource Identifier (URI) which contains the Public User Identity (PUI) of the called user, UE 102-2. The PUI may define the details regarding the UE 102-2, such as its address and location. Further, the invite requests may also include a contact header field which may include a SIP URI. The SIP URI may indicate the physical address of the device where the calling user wishes to receive the media content pertaining to the same session, from the called user. In other words, along with the details of the called user utilizing the UE 102-2, the calling user, through the UE 102-1, shares the details where it wishes to receive the reply from the called user, in the initiated invite request.

In one implementation, the S-CSCF 108-1 analyzes session description protocol (SDP) parameters corresponding to the invite request. The SDP parameters may indicate the type of session requested by the UE 102-1. In said implementation, since the UE 102-1 has initiated the invite request for a video call session, the type of session determined by the S-CSCF 108-2 would be video call. However, in situations where the UE 102-1 may send an invite request for audio call sessions, the S-CSCF 108-1 may determine the type of session to be an audio call. Based on the type of session, the S-CSCF 108-1 may verify the user subscription for subtitle support. It would be understood that in case of an audio session, the S-CSCF 108-1 may verify the user subscription for audio language translations. Further, it would also be understood that the audio language translation may also occur in video calls from which the user may have also subscribed for.

In one implementation, the S-CSCF 108-1 may verify the user subscription of subtitle support based on the user service profile of the UE 102-1 received from the HSS 112-1. As would be apparent to those skilled in the art, the user service profile information is available with an HSS associated with the user and is provided to the S-CSCF associated with the user during the registration procedure. Further, the user service profile may include, but not limited to, user location, service triggers, user identities, registration information, subscribed services, etc. associated with the user.

In said implementation, the S-CSCF 108-1 may further identify the subscription details and the permissions related to the subscription of subtitle support based on the data received from the HSS 112-1, associated with the user. In other words, the S-CSCF 108-1 may verify the subscription of the user to the subtitle support service based on user service profile received from the HSS 112-1, and then identify the subscription details. The subscription details may include details, such as type of subscription amongst - subtitle support in all outgoing calls, subtitle support in selected outgoing calls, subtitle support in all incoming calls, and subtitle support in selected incoming calls; the language of subtitles and/or audio language translation, and the defined list of called users, in case the user has selected any option from subtitle support in selected outgoing calls and subtitle support in selected incoming calls.

In one example, the calling user utilizing the UE 102-1 may have subscribed to the service of subtitle support in video calls. Further, the calling user may have chosen the option of subtitle support in selected outgoing calls. The S-CSCF 108-1 associated with the calling user, upon identifying the subscription of the calling user to the service of subtitle support, may identify the type of subscription and user permissions against the invite request. It would be understood that in situations where the calling user has subscribed to subtitle support for all outgoing calls, the user permissions may not be identified by the S-CSCF 108-1.

The S-CSCF 108-1 may modify the contact header field of the invite request based on the identified subscription details and permissions, according to an implementation of the present subject matter. As described before, the contact header of the invite request includes a SIP URI that indicates the physical address where the calling user, utilizing the UE 102-1, wishes to receive the media content from the called user. To establish a video call session with a called user, such as the user utilizing UE 102-2, generally the calling user utilizing the UE 102-1, describes the address of the UE 102-1 in the SIP URI of the invite request. The S-CSCF 108-1 may set the contact header field, from the address of the UE 102-1, to the address of the media server 114-1 associated with the S-CSCF 108-1. For the sake of explanation, the invite request with the modified contact header field is referred to a modified invite request hereinafter. The modification in the contact header field of the invite request may ensure that the media content, to be received by the calling user, is routed to the media server 114-1. This may allow the media server 114-1 to provide subtitle support to the video data received from the called user, pertaining to the session of the invite request.

In one implementation, the S-CSCF 108-1 may preserve the original contents of the contact header field before modification for further use. Further, the S-CSCF 108-1 may initiate a Media Register (MR) request to be sent to the media server 114-1. The MR request may be sent by the S-CSCF 108-1 more than once before the media content exchange between the calling user and the called user starts to indicate relevant session parameters to provide dynamic captioning support. Further, in one implementation, the S-CSCF 108-1 may communicate with the media server to exchange information such as, negotiated codecs between the calling user and the called user, and session parameters. The MR request may include the session details associated with the invite request. In said implementation, the session details may include, but not limited to, session Id., URI of the calling user, address of the calling user, address details of the called user, desired and supported codes by the calling user for the session and user preferences included in the subscription details, such as the subtitle language. An example of the MR request sent by the S-CSCF 108-1 is as follows:
REGISTER <MEDIA SERVER URI> SIP/2.0
Via: SIP/2.0/UDP [1080::8:800:200C:417A]:5059;comp=sigcomp; branch=z9hG4bK9h9ab
Max-Forwards: 70
From: <sip:24832355512348323.248.imsi.3gppnetwork.org>;tag=4fa3
To: <URI OF CALLING USER>
Contact: <CONTACT ADDRESS OF THE CALLING USER>;
expires=600000
Call-ID: 23fi571ju

As shown in the example above, the MR request includes the destination of the media server, such as the media server 114-1, the address and the URI details of the calling user, such as the UE 102-1, and the session Id. related to the session. The MR request, as depicted above, may include other parameters, such as user preferences including other subscription details, and desired and supported codecs.

In one implementation, the media server 114-1 may acknowledge the MR request sent by the S-CSCF 108-1. Upon a successful acknowledgement, the S-CSCF 108-1 may forward the modified invite request to the I-CSCF 110. The I-CSCF 110 acts as a gateway between the S-CSCF 108-1 associated with the UE 102-1 and the S-CSCF 108-2 associated with the UE 102-2. In one implementation of the present subject matter, the I-CSCF 110 analyzes the modified invite request to identify the called user based on the PUI present in the request. The identification of the called user allows the I-CSCF 110 to determine the user service profile associated with the called user which in turn also allows the identification of the S-CSCF associated with the called user. In said implementation, the determination of the user service profile is done based on the user service profile received from the HSS 112-2.

As described earlier, the HSS 112 stores the user service profile associated with all the subscribed users of the IMS network 104 and the details of the S-CSCF associated with different users is updated in the HSS 112 upon every registration process of the IMS network 104 user. Therefore, the I-CSCF 110 queries the HSS 112-2 to determine the user service profile of the called user and also identifies the S-CSCF associated with it. In said implementation, the I-CSCF 110 queries the HSS 112-1 with a diameter Location-Information-Request (LIR) message to which the HSS 112-2 replies in a diameter Location-Information-Answer (LIA). As described before, the invite request initiated by the calling user utilizing the UE 102-1 is directed towards the called user utilizing the UE 102-1. Hence, the I-CSCF 110 determines the S-CSCF 108-2 to be associated with the UE 102-2 and forwards to it, the modified invite request.

Further, the S-CSCF 108-2 upon determination of the called user from the PUI of the received modified invite request, forwards the modified invite request to the P-CSCF 106-2, connected to the called user. The P-CSCF 106-2 may in turn forward the modified invite request to the UE 102-2, being utilized by the called user.

According to an implementation of the present subject matter, the modified invite request received by the UE 102-2 may include, but not limited to, the address and port numbers of the media server 114-1 where the called user should sent the media content related to the session and; the desired and supported codecs by the calling user, for the media content. Media content related to a session, as will be understood, is the actual audio or video data exchanged between the calling user and the called user during the session. In video sessions, the media content may include a combination of video data and audio data, however, in audio sessions; the media content may only include the audio data.

Upon receiving the modified invite request, the UE 102-1 may respond with a 183 (session progress) request. In one implementation, the session progress request also includes a contact header field that includes a SIP URI indicating the address details of the called user utilizing the UE 102-2, at which the called user wishes to receive the media content, to be sent by the calling user in the subsequent data flows. The session progress request initiated by the called user utilizing the UE 102-2, for the calling user utilizing the UE 102-1 is received by the P-CSCF 106-2 to which to the UE 102-2 is connected. The P-CSCF 106-2, based on the destination defined in the session progress request, forwards the session progress request to the S-CSCF 108-2 associated with the UE 102-2.

In one implementation of the present subject matter, similar to the S-CSCF 108-1, the S-CSCF 108-2 analyzes the SDP parameters of the session progress request to identify the type of session and determine if the request is in response to a video call session request and whether the request has been accepted by the called user. Upon a positive determination, the S-CSCF 108-2 may verify the subscription of the called user for subtitle support in video calls. In case the called user has subscribed for the service of subtitle support in video calls, the S-CSCF 108-2 may identify the subscription details and the associated permissions. The subscription details may include, but not limited to, the type of subscription selected between the subtitle support for all incoming calls and subtitle support for selected incoming calls, language of the subtitles and language of audio language translations preferred by the called user, and the list of users defined by the called user for the service for subtitle support in selected incoming calls has been subscribed for.

Further, once the subscription details related to the called user are received by the S-CSCF 108-2, the S-CSCF 108-2 may modify the contact header field of the session progress request. The modification in the contact header field of the session progress field may include changing the SIP URI from the address of the called user utilizing the UE 102-2 to the address of the media server 114-2. For the sake of clarity, the session progress request with modified contact header field is referred to as a modified session progress request, hereinafter. Further, upon modifying the contact header field of the session progress request, the S-CSCF 108-2 may send a MR request to the media server 114-2.

In one implementation, the MR request sent by the S-CSCF 108-2 is structurally similar to the MR request sent by the S-CSCF 108-1 to the media server 114-1 with few variations in parameter values, such as address and details of the called user. The MR request sent by the S-CSCF 108-2, according to an implementation may include the session Id, the address details of the called user, and the called user subtitle preferences, such as the subtitle language. An example of the MR request sent by the S-CSCF 108-2 is as follows:
REGISTER **<MEDIA SERVER URI>** SIP/2.0
Via: SIP/2.0/UDP [1080::8:800:200C:417A]:5059;comp=sigcomp;
branch=z9hG4bK9h9ab
Max-Forwards: 70
From: <sip:24832355512348323.248.imsi.3gppnetwork.org>;tag=4fa3
To: <URI OF CALLED USER>
Contact: <CONTACT ADDRESS OF THE CALLED USER> ;expires=600000
Call-ID: 23fi571ju

It would be appreciated that the MR request sent by the S-CSCF 108-1 includes the same session Id, as represented by the MR request sent by the S-CSCF 108-2. The inclusion of the same session Id. ensures that the subtitle support provided by the media servers 114 to either the calling user utilizing the UE 102-1 or the called user utilizing the UE 102-2 is for the same session.

In an example, a calling user, say user A may have subscribed to the service of subtitle support in video calls, and may have chosen the option of subtitle support in selected outgoing calls. The user A may have also indicated user B and user C as the only users for which he wishes subtitle support. Now, when user A initiates a video call with user B, the user may receive subtitle support from the media server associated with its S-CSCF. During the video session with user B, the user A may initiate another video session with user D. In such a situation, the video data received by the user A, from the user B, would be routed through the media server associated with the user A, however, the video data sent by user D, would be directly received by user A without any interception by the media server. Similarly, in another example, the user A may be in between a video session with user B along with another video session with the user C at the same time. In such a situation, the media server associated with the user A may receive the video data from both the users, user B and user C. To provide subtitles to the corresponding video data, the media server(s) may associate the video data received by each user B and C, based on the session Id. of each session and then provide the subtitle assisted video to the user A.

In one implementation, the modified session progress request is forwarded by the S-CSCF 108-2 to the I-CSCF 110, to further forward the modified session progress request to the calling user utilizing the UE 102-1. In subsequent forwards, the modified session progress request is received by the UE 102-1. In said implementation, upon receiving the modified session progress request, the UE 102-1 would treat it as a normal session progress request and identify the SIP URI address where the called user wishes to receive the media content. In said implementation, the UE 102-1 would determine the SIP URI address to be that of the media server 114-2. Further, the UE 102-1 may also identify whether the called user has accepted the session request based on the SDP parameters of the modified session progress request.

The UE 102-1 may send an acknowledgement of the received modified session progress request to the UE 102-2. In one implementation, the acknowledgement may be sent by the UE 102-1 in the form of a PRACK request which may either traverse through the same IMS network 104 entities as the session progress request, or may traverse a path including a subset of IMS network 104 entities traversed by the modified session progress request. Further, the UE 102-2 may send a 200 (OK) request to the UE 102-1 upon receiving the PRACK request. During the exchange of acknowledgement requests, the S-CSCFs 108 may update the previously stored codec information based on the final SDP values negotiated between the UE 102-1 and the UE 102-2. It would be appreciated by those skilled in the art that the codec values are negotiated between the calling user and the called user during the exchange of acknowledgement requests.

In one embodiment, upon completing the signaling session between the calling user utilizing the UE 102-1 and the called user utilizing the UE 102-2, the calling user and the called user may communicate with each other directly. This may involve a one-to-one communication where the media content of the calling user provided by the UE 102-1 is intercepted by the media server 114-2, and the media content of the called user provided by the UE 102-2 is intercepted by the media server 114-1.

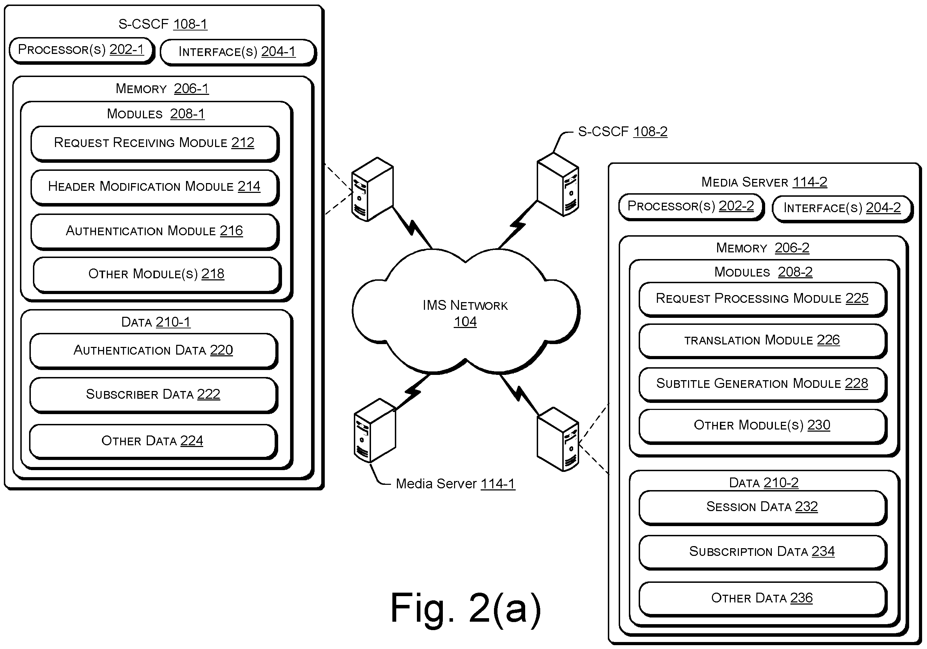

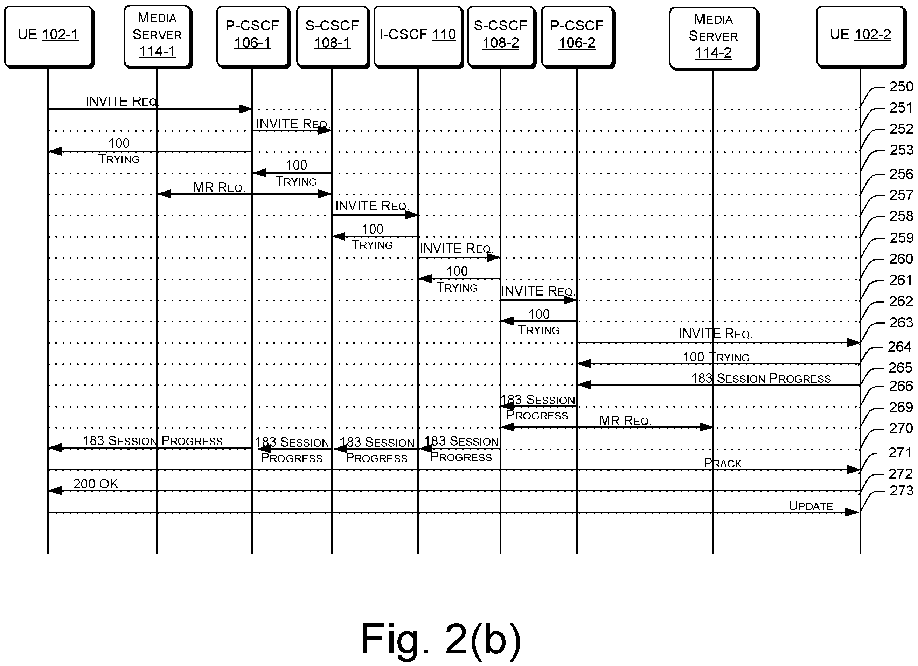

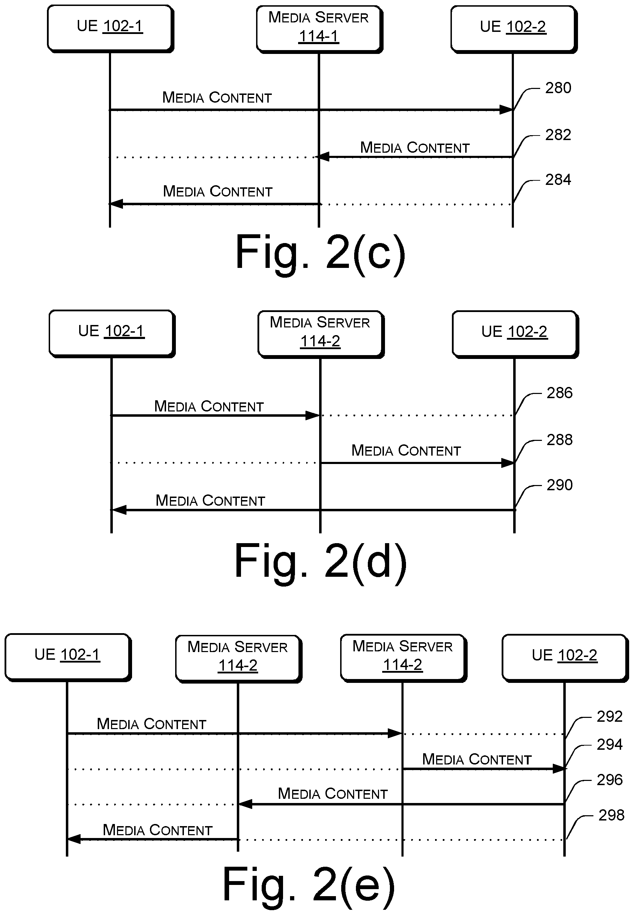

For the sake of better understanding, the details of the S-CSCF 108-1, the S-CSCF 108-2, the media server 114-1, and the media server 114-2 are further explained in greater detail with reference of Fig. 2(a), 2(b), 2(c), 2(d) and 2(e).

Fig. 2(a) illustrates the components of the S-CSCF 108-1, the S-CSCF 108-2, the media server 114-1, and the media server 114-2, according to an embodiment of the present subject matter. In accordance with the present subject matter, the S-CSCF 108-1, the S-CSCF 108-2, the media server 114-1, and the media server 114-2 are communicatively coupled to each other through the various components of the IMS network 104.

Fig. 2(b), 2(c), 2(d), and 2(e) illustrates a call-flow diagram indicating media enrichment for a call in an IMS network, in accordance with an embodiment of the present subject matter. The various arrow indicators used in the call-flow diagram depict the transfer of information between the UEs 102, the media servers 114, the P-CSCFs 106, the S-CSCFs 108, and the I-CSCF 110. In many cases, multiple network entities besides those shown may lay between the entities, including transmitting stations, switching stations, and communication links, although those have been omitted for clarity. Similarly, various acknowledgement and confirmation network responses may also be omitted for the sake of clarity.

The different components of the S-CSCFs 108 and the media servers 114 shown in Fig. 2(a) have been described with reference to the call flow represented in Fig. 2(b), 2(c), 2(d), and 2(e), however it would be understood that the S-CSCFs 108 and the media servers 114, or equivalents thereof, may be implemented in a different manner, without digressing from the scope and spirit if the present subject matter. Further, although the description of Fig. 2(a), 2(b), 2(c), 2(d), and Fig. 2(e) has been provided with respect to an IMS network 104, it will be understood that the service of media enrichment for a call to provide subtitle support and audio language translation may be implemented for other networks as well, for example, GSM and CDMA network.

Although in figure 2(a), only the components of the S-CSCF 108-1 and media server 114-2 are described; in one implementation of the present subject matter, the S-CSCF 108-2 and the media server 114-1 would be similar in implementation, and would also include the components similar to that of the S-CSCF 108-1 and media server 114-2. Hence, the components of the S-CSCF 108-2 and the media server 114-1 have been shown in the figures for the ease of depiction. The S-CSCF 108-1 and the media server 114-2 include processors 202-1, 202-2, collectively referred to as processor 202 hereinafter. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory.

The functions of the various elements shown in the figure, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), non-volatile storage. Other hardware, conventional and/or custom, may also be included.

Also, the S-CSCF 108-1 and the media server 114-2 include interface(s) 204-1, 204-2, collectively referred to as interfaces 204. The interfaces 204 may include a variety of software and hardware interfaces that allow the S-CSCF 108-1 and the media server 114-2 to interact with the IMS network 104, or with each other. Further, the interfaces 204 may enable the S-CSCF 108-1 and the media server 114-2 to communicate with other communication and computing devices, such as web servers and external repositories. The interfaces 204 may facilitate multiple communications within a wide variety of networks and protocol types, including wire networks, for example LAN, cable, etc., and wireless networks, for example WLAN, cellular, satellite-based network, etc.

The S-CSCF 108-1 and the media server 114-2 may also include memory 206-1, and 206-2, respectively, collectively referred to as memory 206. The memory 206-1 and 206-2 may be coupled to the processor 202-1, and the processor 202-2, respectively. The memory 206 may include any computer-readable medium known in the art including, for example, volatile memory (e.g., RAM), and/or non-volatile memory (e.g., EPROM, flash memory, etc.).

The memory 206-1, 206-2 of the S-CSCF 108-1 and the media server 114-2 includes modules 208-1, 208-2 and data 210-1, 210-2, respectively, collectively referred to as modules 208 and data 210, respectively. The modules 208 include routines, programs, objects, components, data structures, and the like, which perform particular tasks or implement particular abstract data types. The modules 208 further include modules that supplement applications on the S-CSCF 108-1 and the media server 114-2, for example, modules of an operating system. The data 210 serves, amongst other things, as a repository for storing data that may be fetched, processed, received, or generated by one or more of the modules 208.

In an implementation, the modules 208-1 of the S-CSCF 108-1 include a request receiving module 212, a header modification module 214, an authentication module 216 and other module(s) 218. In said implementation, the data 210-1 of the S-CSCF 108-1 includes authentication data 220, subscriber data 222, and other data 224. The other module(s) 218 may include programs or coded instructions that supplement applications and functions, for example, programs in the operating system of the S-CSCF 108-1, and the other data 224 comprise data corresponding to one or more other module(s) 218.

Similarly, in an implementation, the modules 208-2 of the media server 114-2 include a request processing module 225, a translation module 226, a subtitle generation module 228, and other module(s) 230. In said implementation, the data 210-2 of the media server 114-2 includes session data 232, subscription data 234, and other data 236. The other module(s) 230 may include programs or coded instructions that supplement applications and functions, for example, programs in the operating system of the S-CSCF 108, and the other data 236 comprise data corresponding to one or more other module(s) 230. The other data may include data related to operators, such as operator Id. SCP addresses, and the like.

Referring to Fig. 2(b), 2(c), 2(d), and 2(e), the UEs 102, such as the UE 102-1 and the UE 102-2 may be connected to their respective P-CSCFs, such as the P-CSCF 106-1 and the P-CSCF 106-2. The P-CSCFs 106 may in-turn be coupled with the S-CSCFs 108, such as the S-CSCF 108-1 and the S-CSCF 108-2, and the media server 114-1 and the media server 114-2, respectively. The S-CSCFs 108 may be connected through the I-CSCF 110.

According to an implementation of the present subject matter, the S-CSCF 108-1, the S-CSCF 108-2, the media server 114-1, and the media server 114-2 are configured to provide media enrichment to a call of the UEs 102 connected through the IMS network 104. In said implementation, the media server 114-1 provides subtitle support in video calls along with audio language translation of audio and video calls, to the user utilizing UE 102-1. Similarly, the media server 114-2 provides subtitle support in video calls along with audio language translation of audio and video calls, to the user utilizing UE 102-2.

In said implementation, a calling user utilizing the UE 102-1 may initiate an invite request towards a called user utilizing the UE 102-2 for a video call session, as indicated by step 250. The invite request initiated by the UE 102-1 is received by the P-CSCF 106-1 and an acknowledgement request in the form of 100 (Trying) is sent back to the UE 102-1 at step 252. Further, the request receiving module 212 of the S-CSCF 108-1 is configured to receive the invite request from the P-CSCF 106-1, at the step 251 and send a 100 (Trying) request to the P-CSCF 106-1 at step 253.

In one implementation, the request receiving module 212 may also determine the type of the invite request. Since the request initiated by the UE 102-1 is for a video call session, the request receiving module 212 may determine the type of the invite request to be video. Further, for the video call session, the request receiving module 212 may verify subscription of the calling user to the service of subtitle support in video calls. In one implementation, the verification is done based on the user service profile saved in the subscriber data 222 of the S-CSCF 108-1, received from the HSS 112-1 during the registration process of UE 102-1.

In one implementation, once the subscription details are identified by the S-CSCF 108-1, the header modification module 214 may modify the contact header field of the INIVITE request to change the SIP URI address to that of the media server 114-1. In said implementation, the header modification module 214 may also send a Media Register (MR) request to the media server 114-1, at step 256. A request processing module of the media server 114-1, may receive the MR request from the S-CSCF 108-1. As described before, the MR request may provide the media server 114-1 with the session details, subscription details, and the session participant details for providing subtitle support to the video data provided by the called user.

Further, the modified invite request is forwarded by the S-CSCF 108-1 towards the UE 102-2. For this purpose, the modified invite request is received by the I-CSCF 110 at step 257 to which the I-CSCF 110 sends an acknowledgement to S-SCSF 108-1 at step 258. Based on the called user identified from the modified invite request, the I-CSCF 110 may forward the modified invite request to the S-CSCF 108-2, at step 259. The request receiving module of the S-CSCF 108-2 may receive the modified invite request and send an acknowledgement at step 260 in the form of a 100 trying request. The P-CSCF 106-2 may further receive the modified invite request from the S-CSCF 108-2 at step 261 to which an acknowledgement may be sent at step 262. The UE 102-2 may finally receive the modified invite request at step 263 from the P-CSCF 106-2.

The UE 102-2 may also send an acknowledgement to the P-CSCF 106-2 as a 100 trying request at step 264. In one implementation, the called user may accept the video call session initiated by the calling user. In said implementation, the UE 102-2 may send a 183 session progress request to the UE 102-1. The 183 session progress request may first be received by the P-CSCF 106-2 at step 265 and then forwarded to the S-CSCF 108-2 associated with the called user at step 266. In said implementation, the request receiving module 212 of the S-CSCF 108-2 may receive the 183 session progress request from the P-CSCF 106-2. Upon receiving the session progress request, the authentication module 216 may verify the called user's subscription for subtitle support in video calls based on the user service profile saved in the subscriber data 222, received from the HSS 112-2 during the registration process of UE 102-2. Further, the header modification module 214 may also send a MR request to the media server 114-2 at step 269. The MR request may provide to the media server 114-2 with the required details such that the media server 114-2 may provide the video data received from the calling user with subtitle support.

The S-CSCF 108-2 may further forward the modified session progress request to the UE 102-1 through the I-CSCF 110, the S-CSCF 108-1, and the P-CSCF 106-1 at step 270. Upon receiving the session progress request, the UE 102-1 may send an acknowledgement to the UE 102-2 in the form of a PRACK request, at step 271. In response to the PRACK request, the UE 102-2 may send a 200 OK request at step 272. At step 273, the UE 102-1 may send an update request to the UE 102-2. It would be understood by those skilled in the art that after the step 273, few more SIP requests would be shared between the UE 102-1 and UE 102-2 which have been omitted for the sake of brevity.

Once the signaling session is complete, the UE 102-1 and the UE 102-2 may start streaming the media content to each other. In one implementation, the video data sharing between the UE 102-1 and the UE 102-2 is on one-to-one basis. However, the video data provided by the UE 102-1 is intercepted by the media server 114-2, and the video data provided by the UE 102-2 is intercepted by the media server 114-1 to provide subtitle and audio language translation support to the video call session. For the sake of clarity, different call flows of media content between the UE 102-1 and the UE 102-2 upon completion of the signaling session is described in Fig. 2(c), 2(d), and 2(e).

In one implementation of the present subject matter, the user utilizing the UE 102-1 may have subscribed for the service of media enrichment for a call including one or more of subtitle support in video calls, audio language translation in video calls, or audio language translation in video calls. Further, the user utilizing the UE 102-2 may have not subscribed to any service of media enrichment for a call. The call flow in such a scenario has been explained with reference to Fig. 2(c). In said implementation, the UE 102-1 may send the media content directly to the UE 102-2 at step 280. However, the media content provided by the UE 102-2 is first received by the media server 114-1, at step 282.

Since the user utilizing the UE 102-1 has subscribed to the service of subtitle support in video calls, the subtitle generation module 228 may generate subtitles for a video data provided by the UE 102-2 based on the audio of the video data. In one implementation, the subtitles are generated in the language specified by the user utilizing the UE 102-1. The subtitle generation module 228 of the media server 114-1 may identify the specified language based on the subscription data 234 received by the media server 114-1 during the MR request from the S-CSCF 108-1. Further, if the user utilizing the UE 102-1 has subscribed to the service of audio language translation in video calls, the translation module 226 of the media server 114-1 may translate the audio of the video data from one language to the other. It would be appreciated that the user utilizing the UE 102-1 may have subscribed for the service of subtitle support along with audio language translation support in video calls. In such situation both, the subtitle generation module 228 and the translation module 226 of the media server 114-1 may provide subtitle support and audio language translation support to the video data. At step 284, the modified media content is then provided by the media server 114-1 to the UE 102-1.

In another implementation of the present subject matter, the user utilizing the UE 102-1 may have not subscribed to any media enrichment service, however, the user utilizing the UE 102-2 may have subscribed to the service of media enrichment for a call. Call flow in such a scenario has been explained with reference to Fig. 2(d). In such a scenario, at step 286, the media content provided by the UE 102-1 is received by the media server 114-2 for modification based on user utilizing the UE 102-2s subscription. The media server 114-2, upon modifying the media content, may provide the modified content to the UE 102-2, at step 288. Since the user utilizing the UE 102-1 has not subscribed to the service of media enrichment for a call, the media content provided by the UE 102-2 is directly received by the UE 102-1 at step 290.

In yet another implementation, the user utilizing the UE 102-1 and the user utilizing the UE 102-2 may both have subscribed to the service of media enrichment for a call. The call flow in such a scenario has been explained with reference to Fig. 2(e). Is said scenario, the media content provided by the UE 102-1 is received by the media server 114-2 at step 292. The media server 114-2 may modify the media content based on user utilizing the UE 102-2 preferences and may provide the modified data content to the UE 102-2 at step 294. Similarly, the media content provided by the UE 102-2 is received by the media server 114-1 at step 296. The media server 114-1 may also modify the received media content based on user utilizing the UE 102-1 preferences and may provide the modified data content to the UE 102-1 at step 298.

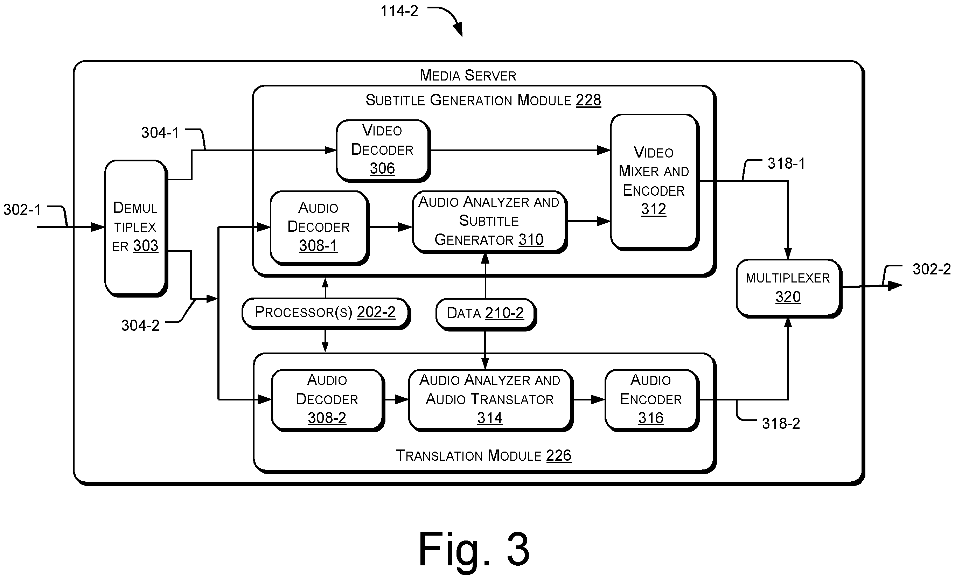

Fig. 3 illustrates a schematic explanation of the media server 114-2, according to an embodiment of the present subject matter. Although the explanation is in reference to the media server 114-2, it would be understood that the media server 114-1 or any other media server may include similar components to provide media enrichment for a call. In one implementation, the media server 114-2, apart from other things, is configured to provide modified media content to the user utilizing UE 102-2. The modification to the media content may include providing subtitle support and/or audio language translation in video calls, and audio language translation support in audio calls. The media server 114-2 may receive the media content from the UE 102-1, as 302-1. The media content 302-1 may be de-multiplexed by a demultiplexer 303 into video data 304-1 and audio data 304-2 for video calls. However, for audio calls, the media content may only include audio data 304-2.

To provide media enrichment for a call, as explained before, the media server 114-2 may include the processors 202-2, the data 210-2, the translation module 226, and the subtitle generation module 228. To process the media content and decode the encoded data, the translation module 226 and the subtitle generation module 228 may include video decoder 306 and audio decoder 308-1, and audio decoder 308-2 respectively. The media server 114-2 may include the subscription data 234 related to the user utilizing the UE 102-2, stored in the data 210-2. As described earlier, the subscription data 234 may be received by the media server 114-2 during the MR request received from the S-CSCF 108-2. Based on the subscription data 234 stored in the data 210-2, the media content received by the media server 114-2 may be provided with the subtitle support, the audio language translation support, or both. In case the user utilizing the UE 102-2 has subscribed to the service of subtitle support along with the support for audio language translation in video calls, the media content received from the UE 102-1 containing the video data 304-1 and the audio data 304-2 is modified by the media server 114-2. The video decoder 306 may decode the video data 304-1 whereas the audio decoder 308-1 and the audio decoder 308-2 may decode the audio data 304-2 of the media content 302-1.

To provide subtitle support, the subtitle generation module 228 may include an audio analyzer and subtitle generator 310. The audio analyzer and subtitle generator 310 may analyze the decoded audio data to generate subtitles. In one implementation, the language in which the subtitles are generated by the audio analyzer and subtitle generator 310 is based on the subscription details of the user. In other words, the language in which the subtitles are generated by the audio analyzer and subtitle generator 310 are based on user preferences.

In one implementation, the subtitles generated by the audio analyzer and subtitle generator 310 are provided to a video mixer and encoder 312. The video mixer and encoder 312 may add the subtitles to the decoded video data received from the video decoder 306. The decoded video data mixed with the subtitles may then be encoded to generate a modified video data 318-1.

Similarly, according to an implementation of the present subject matter to provide audio language translation, the translation module 226 may include an audio analyzer and audio translator 314. The audio analyzer and audio translator 314 may analyze the decoded audio data to translate it from one language to the other. In one implementation, the translation of the audio data is based on the subscription details of the user, stored in the data 210-2. The translated audio data may then be encoded through an audio encoder 316 to generate a modified audio data 318-2.

The modified video data 318-1 and the modified audio data 318-2 may then be combined by a multiplexer 320 to generate a modified media content 302-2. Although, subtitle support and audio language translation support have been described for the media content 302-1, it would be understood that in situation where a user has subscribed only to the service of subtitle support in video calls, the translation module 226 may not translate the audio data 304-2 associated with the media content 302-1. Similarly, in situations where the user has subscribed only to the service of audio language translation, the subtitle generation module 228 may not generate any subtitle for the video data 304-1 based on the audio data 304-2.

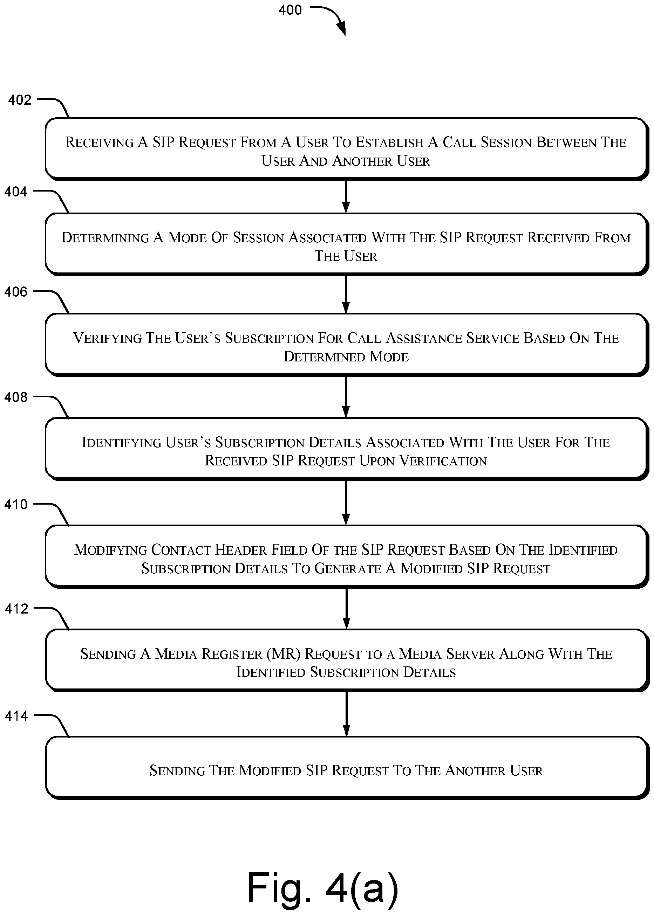

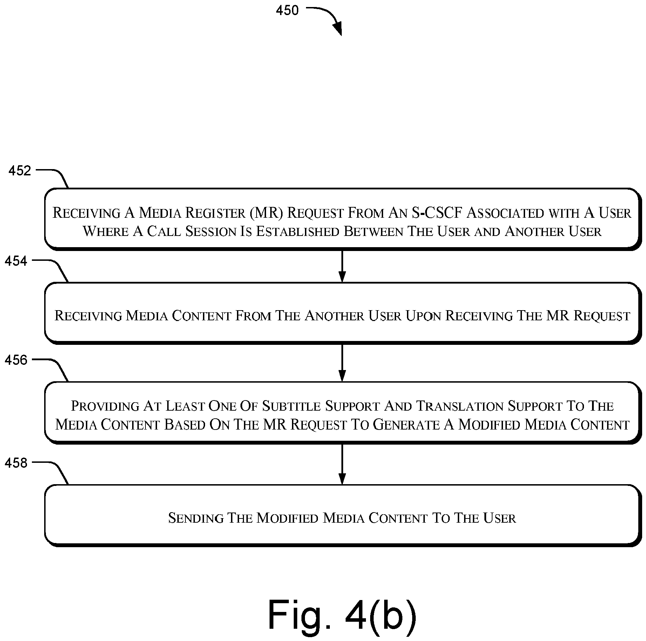

Fig. 4(a) and 4(b) illustrates methods 400 and 450 for providing media enrichment for a call in an IMS network, according to an embodiment of the present subject matter. The order in which the method 400 is described is not intended to be construed as a limitation, and any number of the described method blocks can be combined in any order to implement the method 400 and 450, or any alternative methods. Additionally, individual blocks may be deleted from the methods without departing from the spirit and scope of the subject matter described herein. Furthermore, the methods can be implemented in any suitable hardware, software, firmware, or combination thereof.

The method(s) may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

A person skilled in the art will readily recognize that steps of the methods can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media such as a magnetic disks and magnetic tapes, hard drives, or optically readable digital data storage media. The embodiments are also intended to cover both communication network and communication devices configured to perform said steps of the exemplary methods.

Referring to Fig. 4(a), the method 400 may be implemented by the S-CSCF 108. At block 402, a SIP request from a user to establish a call session between the user and another user is received. In one implementation of the present subject matter, one of the S-CSCFs 108 may receive a SIP request from a user. The user may be a calling user or may be a called user. In said implementation, if the SIP request is received from the calling user, the SIP request would be an invite request, however, if the SIP request is received from the called user, the SIP request would be a session progress request.

At block 404, a type of session associated with the SIP request received from the user is determined. In one implementation, the type of session may either be a video session or an audio session. The S-CSCF 108 may determine the type of session based on the SDP parameters of the SIP request. In said implementation, the type of the session in invite request may depend on the choice of the calling user and the response of the called user may confirm the type of session in the session progress request.

At block 406, the user's subscription for media enrichment for a call service is verified based on the determined type of session. In one implementation, the user may have either subscribed to the service of media enrichment for a call or may have not subscribed to the service. Further, the subscription to the service may include one or more subscriptions, such as subtitle support in video calls, audio language translation in video calls, and audio language translation in video calls. Hence, the user subscription may be determined based on the type of session. In one example, the user may have subscribed to the service of audio language translation in video and audio calls. In such a scenario, if the SIP request is for video call session, the subscription only for video calls would be verified.

At block 408, user's subscription details associated with the user for the received SIP request are identified, upon verification of the user's subscription. In one implementation, the subscription details may include the type of subscription based on the identified type of session, such as subtitle support in all outgoing calls, subtitle support in selected outgoing calls, subtitle support in all incoming calls, and subtitle support in selected outgoing calls. Similarly, for audio type of session, subscription details may include different type of subscription, such as audio language translation in all outgoing calls, audio language translation in selected outgoing calls, audio language translation in all incoming calls, and audio language translation in selected incoming calls. In one implementation, the subscription details may further include, among other things, the preferred language of the user.

At block 410, contact header field of the SIP request is modified based on the identified subscription details to generate a modified SIP request. In one implementation, the contact header of the SIP request is modified to change the SIP URI address to that of a media server address associated with the user to provide media enrichment. In said example, if the SIP request is an invite request, the SIP URI is modified to indicate the address of the media server associated with the calling user. Similarly, if the SIP request is a session progress request, the SIP URI is modified to indicate the address of the media server associated with the called user.

At block 412, a Media Register (MR) request is sent to the media server associated with the user along with the identified subscription details. According to an implementation, the MR request sent to the media server provides the address of the user from which the SIP request has been received, the subscription details of the user along with the session details. Further, in one implementation, the media server may be communicated with, multiple times to exchange information related to the session, such as the negotiated codes.

At block 414, the modified SIP request is sent to the another user. In one implementation, the modified SIP request includes the modified contact header field indicating the address of the media server associated with the user. Further, the modified SIP request may either be a modified invite request, or may be a modified session progress request depending on the user generating the request, such as the calling user and the called user.

Referring to Fig. 4(b), the method 450 may be implemented by the media servers 114. In one implementation, at block 452, a Media Register (MR) request is received from an S-CSCF associated with a user where a call session is established between the user and another user. The MR request, according to the said implementation, may include the details of the user along with the session details and user subscription details for the media server to provide media enrichment for a call.

At block 454, media content from the another user is received, upon receiving the MR request. The media content may include either video data or audio data sent by the another user. It would be understood by those skilled in the art that the video data would include a combination of video and audio whereas the audio data would only include audio data. Further, the media content would be defined by the type of session defined during the signaling session.

At block 456, at least one of subtitle support and translation support is provided to the media content based on the MR request to generate a modified media content. In one implementation, the MR request received at block 452 may define the user subscription to service of subtitle support in video calls and may not include subscription to audio language translation. In said implementation, the media server may modify the media content by providing only the subtitle support to the video data without providing any audio language translation support. The modified media content may include a combination of original video data, original audio data, and subtitles based on the audio data. The media server may further send the modified data to the user, as described at block 458.

Although embodiments for methods and systems for providing media enrichment for a call in an IMS network have been described in a language specific to structural features and/or methods, it is to be understood that the invention is not necessarily limited to the specific features or methods described. Rather, the specific features and methods are disclosed as exemplary embodiments for media enrichment for a call in an IMS network.

## Claims

1. A method to provide media enrichment for a call in a communication network, the method comprising:
receiving an invite request, from a calling user, wherein the invite request is sent to initiate a session between the calling user and a called user;
identifying user subscription details associated with the calling user for the received invite request; and
modifying contact header field of the invite request based on an address of a media server, wherein the media server is configured to provide media enrichment for the call.

2. A method to provide media enrichment for a call in a communication network, the method comprising:
receiving a Session Progress request, from a called user, wherein the session progress request is sent to confirm a session between the called user and a calling user;
identifying user subscription details associated with the called user for the received session progress request; and
modifying the contact header field of the session progress request based on an address of a media server, wherein the media server is configured to provide media enrichment for the call.

3. The method as claimed in claim 1 or 2, wherein the modifying comprises changing a Uniform Resource Identifier (URI) of the received request to an address of a media server.

4. The method as claimed in any one of the preceding claim, wherein the invite request and the session progress request are session initiation protocol (SIP) messages.

5. The method as claimed in claim 1 or 2, wherein the identifying user subscription details comprises:
analyzing session description protocol (SDP) parameters of the received request to identify a type of session between the calling user and the called user; and
determining user subscription associated with the request based on the type of session to identify user subscription details associated with one of the calling user and the called user.

6. The method as claimed in claim 5, wherein the user subscription relates to one or more of subtitle support in video calls, audio language translation support in video calls, and audio language translation support in audio calls.

7. The method as claimed in claim 1 or 2, wherein the method further comprises sending a Media Register (MR) request to a media server, and wherein the MR request is indicative of one or more of session details and user subscription details.

8. The method as claimed in claim 1 or 2, wherein the user subscription details are one or more of type of subscription, the language of subtitle, language of audio translation, and a list of users for which subscription has been made for.

9. The method as claimed in claim 8, wherein the type of subscription based on type of session comprises one or more of subtitle support for all incoming video calls, subtitle support for selected incoming video calls, subtitle support for all outgoing video calls, subtitle support for selected outgoing video calls, audio language translation for all incoming video calls, audio language translation for selected incoming video calls, audio language translation for all outgoing video calls, audio language translation for selected outgoing video calls, audio language translation in all incoming audio calls, audio language translation in selected incoming audio calls, audio language translation in all outgoing audio calls, and audio language translation in selected outgoing audio calls.

10. A method to provide media enrichment for a call in a communication network, the method comprising:
receiving a media register (MR) request, from an S-CSCF associated with a user, wherein the MR is based on a call session established between the user and another user;
receiving media content from the another user; and
modifying the media content to provide at least one of subtitle support and audio language translation support based on the MR request.

11. The method as claimed in claim 10, wherein the method further comprises sending the modified media content to the user.

12. A S-CSCF (108) to provide media enrichment for a call in a communication-network, the S-CSCF (108) comprising:
a processor (202-1); and
a memory (206-1) coupled to the processor (202-1), the memory (206-1) comprising:
a request receiving module (212) configured to receive a Session Initiation Protocol (SIP) request from a user to establish a call session between the user and a another user;
an authentication module (216) configured to identify user subscription details associated with the user for the received SIP request; and
a header modification module (214) configured to modify contact header field of the SIP request based on the identified user subscription details to generate a modified SIP request.

13. The S-CSCF (108) as claimed in any one of the preceding claims, wherein the authentication module (216) is further configured to:
determine a type of session associated with the SIP request received from the user; and
verify user subscription for media enrichment for a call service based on the determined type of session to identify user subscription details associated with the user.

14. The S-CSCF (108) as claimed in any one of the preceding claims, wherein the request receiving module (212) is further configured to send a media register (MR) request to a media server based on the user subscription details.

15. The S-CSCF (108) as claimed in any one of the preceding claims, wherein the request receiving module (212) is further configured to send the modified SIP request to the another user.

16. A media server (114) to provide media enrichment for a call in a communication network, the media server (114) comprising:
a processor (202-2); and
a memory (206-2) coupled to the processor (202-2), the memory (206-2) comprising:
a request processing module (225) configured to:
receive a media register (MR) request from an S-CSCF (108) associated with a user, wherein a call session is established between the user and another user; and
receive a media content from the another user based on the MR request; and
a subtitle generation module (228) configured to provide subtitle support to the media content to generate modified media content.

17. The media server (114) as claimed in any one of the preceding claims, wherein the media server (114) further comprises a translation module (226) configured to provide audio language translation support to the media content to generate modified media content.

18. The media server (114) as claimed in any one of the preceding claims, wherein the request processing module is further configured to sent the modified media content to the user.

19. A computer-readable medium having embodied thereon a computer readable program code for executing a method comprising:
receiving a session initiation request from a user to establish a call session between the user and a another user;
identifying user subscription details associated with the user for the received session initiation request; and
modifying contact header field of the session initiation request based on the identified user subscription details to generate a modified session initiation request.

20. A computer-readable medium having embodied thereon a computer readable program code for executing a method comprising:
receiving a media register (MR) request, from an S-CSCF associated with a user, wherein the MR is based on a call session established between the user and another user;
receiving media content from the another user; and
modifying the media content to provide at least one of subtitle support and translation support based on the MR request.
